# EUROPÄISCHE PATENTSCHRIFT

(11) **EP 2 151 396 B1**
(45) Veröffentlichungstag und Bekanntmachung des Hinweises auf die Patenterteilung: **21.09.2011**
(21) Anmeldenummer: 09008918.6
(22) Anmeldetag: 08.07.2009
(51) Int. Cl.: B65D 33/16, A22C 11/12, B65B 51/04, B27F 7/38, B25C 5/02, B25C 5/16

(54) **Verschlussklammer für schlauchförmige Verpackungen**
Closing clip for tubular casings
Clip de fermeture pour emballages tubulaires

(30) Priorität: 06.08.2008 DE 202008010478 U
(43) Veröffentlichungstag der Anmeldung: 10.02.2010
(73) Patentinhaber: Tipper Tie technopack GmbH, 21509 Glinde (DE)
(72) Erfinder: Bogun, Thomas, 23879 Mölln / Lauenburg (DE)
(74) Vertreter: Glawe, Delfs, Moll

(56) Entgegenhaltungen:
- EP-A2- 0 616 138
- DE-A1- 1 959 755
- US-A- 2 128 443
- US-A1- 2007 033 904

## Beschreibung

Die Erfindung betrifft eine Verschlussklammer zum Verschließen von schlauchförmigen Verpackungen, insbesondere von Wurstdärmen, nach dem Oberbegriff des Patentanspruchs 1, einen Satz von Verschlussklammern nach dem Oberbegriff des Patentanspruchs 5, eine Anordnung einer Verschließvorrichtung und mindestens einer Verschlussklammer nach dem Oberbegriff des Patentanspruchs 6, einen Clipkanal nach dem Oberbegriff des Patentanspruchs 7, einen Stempel nach dem Oberbegriff des Patentanspruchs 8. Ein Verfahren zur Herstellung von Verschlussklammern wird auch offenbart.

Verschlussklammern und Anordnungen der vorgenannten Art sind insbesondere aus der Wurstherstellung bekannt. So offenbart beispielsweise die DE-OS 1 461 873 eine Vorrichtung zum Verschließen des zusammengerafften Endes einer Wurst mit einer U-förmigen Verschlussklammer. Die Verschlussklammer wird durch einen Clipkanal von einem Klammermagazin zu einem Verschlusspunkt oberhalb einer Matrize zugeführt, wo die Klammer mit ihren Beinen das zusammengeraffte Wurstende umschließt und dann mit einem Stempel auf der Matrize so zusammengebogen wird, dass ein fester Verschluss entsteht. Im Gegensatz dazu beschreibt die EP 0 616 138 A2 Heftklammern, die ein im Vergleich zu ihrer Beinlänge vergleichsweise dünnes Profil und angespitzte Beine haben, mit denen sie Werkstücke durchdringen können.

Der Clipkanal für Verschlussklammern kann wie im Fall der DE-OS 1 461 873 in einem linear verschieblichen Stempelgehäuse oder anderweitig ausgebildet sein. Stets jedoch ist er so bemessen, dass Verschlussklammern einer bestimmten Größe sicher darin geführt werden können.

Es ist seit langem erwünscht, dass Verschließvorrichtungen dieser Art für verschiedene Produkte einsetzbar sind. In der Wurstherstellung beispielsweise sollen große und kleine Kaliber mit denselben Maschinen verarbeitet werden können. Unterschiedliche Kaliber bedingen normalerweise aber unterschiedliche Verschlussklammern. In gewissen Grenzen lassen sich die Klammereigenschaften, insbesondere die Zuhaltekraft, über die Materialwahl variieren. Wo das nicht mehr geht oder von vornherein nicht erwünscht ist, erfolgt die Variation der Eigenschaften über die Profilstärke. Festere Verschlussklammern für größere Kaliber haben also stärkere Profile und umgekehrt. Dies führt dazu, dass der Anwender beim Formatwechsel zu einer Klammerart mit anderer Profilstärke die den Clipkanal bildenden Teile der Maschine auswechseln muss.

Die Erfindung stellt sich die Aufgabe, diesen Wechsel der den Clipkanal bildenden Teile zu erübrigen. Sie löst dies durch die Merkmale der Patentansprüche 1, 5 und 6 sowie durch einen Clipkanal gemäß Anspruch 7 und einen Stempel gemäß Anspruch 8.

Die Erfindung beruht auf dem Gedanken, durch Abwicklungen die für die Führung der Verschlussklammer entscheidenden Abmessungen zu variieren, so dass diese Abmessungen trotz unterschiedlicher Materialstärke gleich sein können. Verschlussklammern mit unterschiedlichen Materialstärken können dann durch dieselben Führungsmittel geführt werden.

Die Klammerebene im Sinne der Erfindung ist die Ebene, in der sich die Enden der im Wesentlichen U-förmig gekrümmten Klammer beim Verschließen aufeinander zu bewegen. Sie steht senkrecht auf die Achse der schlauchförmigen, zu verschließenden Verpackung. Stoßen die Enden der bereits verschlossenen Klammer kopfseitig aufeinander (z.B. DE 195 32 691 C2), vollzieht die Verschließbewegung ausschließlich in dieser Ebene. Werden die Enden der Klammer hingegen beim Verschließen aneinander vorbeigeführt (z.B. DE-OS 1 959 755), so liegt die Klammerebene zwischen den Bewegungsbahnen der Klammerenden.

Die U-förmige Krümmung führt dazu, dass die Klammerenden in der Klammerebene gewinkelt sind, so dass die geraffte schlauchförmige Verpackung von der Klammer umschlossen werden kann (s. etwa Fig. 1 der z.B. DE-OS 1 959 755). Die Krümmung kann in einem einzigen Abschnitt der Klammer liegen, an den sich gerade gestreckte Klammerbeine anschließen (z.B. DE-OS 1 959 755). Sie kann aber auch auf zwei Abschnitte verteilt sein, zwischen denen sich ein gerade gestreckter Klammerrücken befindet (z.B. DE-OS 199 04 521). Ebenso kann sie sich auch auf mehr als zwei Abschnitte verteilen (z.B. Fig. 2 der DE 195 32 691 C2). Die Krümmung in der Klammerebene kann sich auch auf die gesamte Klammer erstrecken, insbesondere wenn die Klammerbeine asymmetrisch sind (z.B. DE-OS 2 300 980). Meist umschließt die Krümmung einen Winkel von 180°, d.h. die Klammerbeine zeigen in dieselbe Richtung. Dies muss aber nicht so sein. Vielmehr sind auch divergierende Klammerbeine möglich (z.B. DE 32 44 979 C2).

Eine erfindungsgemäße Abwinklung aus der Klammerebene heraus führt dazu, dass die Verschlussklammer eine Ausdehnung senkrecht zur Klammerebene erhält, die über die durch die Profilbreite bedingte Breite hinausgeht. Ihre effektive Klammerbreite wird dadurch größer. Unter effektiver Klammerbreite ist dabei der minimale Abstand zu verstehen, den zwei parallel zur Klammerebene liegende ebene Wände haben können, wenn sich zwischen ihnen die Verschlussklammer ohne plastische oder elastische Verformung befindet. Der Clipkanal einer Verschließmaschine muss entsprechend geräumig sein. Die Verschlussklammer liegt dann nicht vollflächig mit ihren Seitenflächen an den Wänden des Clipkanals an, sondern nur abschnittsweise oder gar nur mit einzelnen Anlagepunkten. Dafür ist es möglich, dass Verschlussklammern verschiedener Profilstärke dieselbe effektive Klammerbreite haben und somit im gleichen Clipkanal geführt werden können.

Vorteilhafterweise befindet sich zumindest eine Abwinklung aus der Klammerebene heraus in einem Klammerabschnitt, in dem zumindest ein Teil der Krümmung in der Klammerebene liegt. Eine solche Verschlussklammer ist einfach zu fertigen. So kann die Abwinklung aus der Klammerebene heraus in einem Fertigungsschritt mit der Krümmung in der Klammerebene erzeugt werden, z.B. durch einen einzigen Biegevorgang.

In diesem Fall ist es besonders vorteilhaft, wenn die Verschlussklammer aus einem Klammerrücken, zwei Klammerbeinen und dazwischen liegenden in der Klammerebene gekrümmten Übergangsabschnitten besteht und sich die Abwinklung aus der Klammerebene heraus in einem oder beiden der Übergangsabschnitte befindet. Solche Verschlussklammern lassen sich besonders einfach in der Weise fertigen, dass ein länglicher Draht spiralförmig um ein Mehrkantprofil gebogen und anschließend mittig entlang des Mehrkantprofils aufgetrennt wird. Ein die Wicklung und vorzugsweise auch den Trennschritt umfassendes Herstellungsverfahren ist ebenfalls Gegenstand der Erfindung. Das Mehrkantprofil ist dabei vorzugsweise ein Vierkantprofil, so dass die Klammerbeine bezogen auf die Klammerebene parallel zueinander und senkrecht zum Klammerrücken stehen. Es kann eine mittige Sägelehre zur Führung eines Trennwerkzeugs aufweisen.

Weiter ist es bei einer solchen Verschlussklammer vorteilhaft, wenn die Abwinklung sich in beiden Übergangsabschnitten befindet und so gewählt ist, dass die Klammerbeine gegensinnig und jeweils im gleichen Winkel aus der Klammerebene heraus ausgelenkt sind. Die solchermaßen gewählte Symmetrie begünstigt den Lauf der Klammerbeine in der Matrize beim Verschließen, wenn die Klammerbeine aneinander vorbeigeführt werden sollen.

Somit umfasst die Erfindung auch einen Satz von Verschlussklammern mit unterschiedlicher Profilstärke, aber gleicher effektiver Klammerbreite. Der Begriff Profilstärke meint dabei die Flächenausdehnung des Querschnitts der Verschlussklammer. Sofern der Querschnitt variiert, liegt eine unterschiedliche Profilstärke zweier Verschlussklammern jedenfalls dann vor, wenn die Klammern auch bei gleich gewähltem Material einer Biegekraft in der Klammerebene unterschiedliche Widerstände entgegensetzen. Zum erfindungsgemäßen Satz gehörende Verschlussklammern können auch die Abwinklung 0 aufweisen, also herkömmlich ausgeführt sein, sofern mindestens eine Verschlussklammer mit einer von 0 verschiedenen Abwinklung und gleicher effektiver Klammerbreite zum Satz gehört. Denn auch dann ist es möglich, Klammern mit verschiedenen Profilstärken im gleichen Clipkanal zu führen.

Schließlich umfasst die Erfindung auch eine Anordnung einer Verschließvorrichtung zum Verschließen von schlauchförmigen Verpackungen mit einem Clipkanal und einer Verschlussklammer oder einem Satz solcher Klammern. Ein Clipkanal ist dabei eine im Wesentlichen, d.h. abgesehen von etwaigen Durchbrüchen, durchgehende, längliche Einfassung, in der die Verschlussklammer mit etwas Spiel linear geführt werden kann.

Die Erfindung bezieht sich ferner auf einen Clipkanal mit den Merkmalen des Patentanspruchs 7. Ein solcher Clipkanal umfasst zwei jeweils einem Klammerende zugeordnete Führungsschienen. Diese Schienen sind dadurch definiert, dass sie zumindest teilweise an den Klammerenden anliegen und so zur Führung der Verschlussklammer beitragen. Vorbekannte Clipkanäle sind bezogen auf die Klammerebene symmetrisch angeordnet. Demgegenüber sieht die Erfindung vor, die Führungsschienen bezogen auf die Klammerebene zueinander versetzt anzuordnen. Hierdurch ist es möglich, erfindungsgemäße Verschlussklammern mit verschiedenen Abmessungen, winkelstabil so im Clipkanal zu führen, dass der die Führungsschienen überbrückende Klammerabschnitt stets parallel zur Klammerebene liegt. Da der Stempel auf diesen Klammerabschnitt aufsetzt, kann an der Stirnfläche des Stempels eine für alle Verschlussklammern geeignete, sich parallel zur Klammerebene erstreckende Haltenut angeordnet sein. Eine solche Haltenut ist beispielsweise in der EP 0 951 427 B1 beschrieben.

Weisen die Verschlussklammern allerdings unterschiedliche Materialstärken auf, dann kann eine einzige Haltenut nur die Klammern derselben Stärke formschlüssig und damit sicher erfassen. Daher sieht die Erfindung auch Stempel mit den Merkmalen des Patentanspruchs 8 vor. Vorteilhafterweise ist die schmalere Haltenut innerhalb der breiteren angeordnet. Dann kann die Klammerebene stets zentral durch sämtliche Haltenuten verlaufen.

Nachfolgend wird die Erfindung anhand von mit Zeichnungen dargestellten Ausführungsbeispielen näher erläutert. Dabei zeigen:

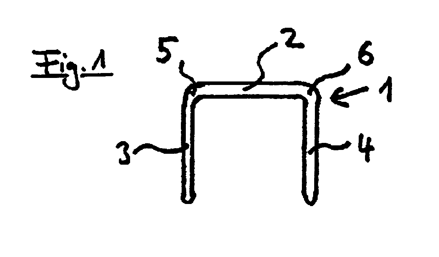

- Fig. 1: eine Draufsicht auf eine erfindungsgemäße Ver- schlussklammer Blickrichtung senkrecht zur Klam- merebene;

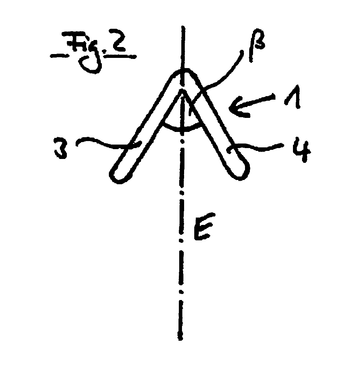

- Fig. 2: eine Seitenansicht der Verschlussklammer nach Fig. 1;
- Fig. 3: zwei erfindungsgemäße Verschlussklammern unter- schiedlicher Profilstärke in einem Clipkanal einer erfindungsgemäßen Verschließvorrichtung;

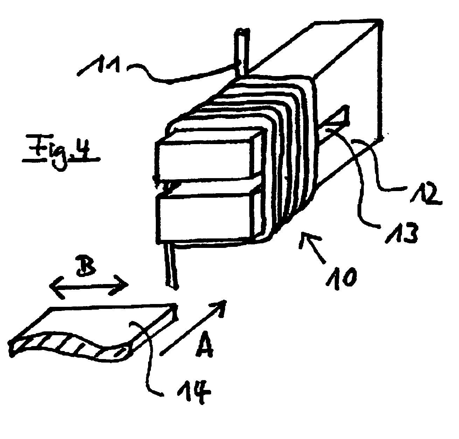

- Fig. 4: Wicklungen eines Drahts um ein Vierkantprofil zur Herstellung erfindungsgemäßer Verschlussklammern in perspektivischer Ansicht;

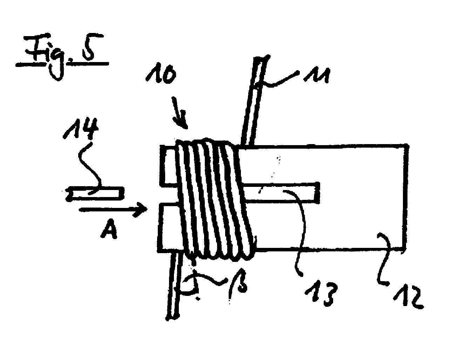

- Fig. 5: die Wicklungen nach Fig. 4 in Seitenansicht;
- Fig. 6: einen Schnitt durch einen erfindungsgemäßen Clip- kanal mit einer darin befindlichen erfindungsgemä- ßen Verschlussklammer;
- Fig. 7: das klammerseitige Ende eines erfindungsgemäßen Stempels mit zwei verschiedenen erfindungsgemäßen Verschlussklammern in Seitenansicht.

Die insgesamt mit 1 bezeichnete Verschlussklammer weist einen gerade gestreckten Klammerrücken 2 und ebenso gerade gestreckte Klammerbeine 3 und 4 auf. Jeweils dazwischen befinden sich gebogene Abschnitte 5 und 6, die jeweils für eine Krümmung von 90° sorgen, so dass die Verschlussklammer 1 insgesamt in der Klammerebene eine Krümmung von 180° aufweist und die Klammerbeine 3 und 4 bezogen auf die Klammerebene parallel liegen. Senkrecht zur Klammerebene sind die Klammerbeine 3 und 4 gegensinnig zu einander ausgelenkt, so dass sie den Winkel β einschließen. Die Abwinklung dafür befindet sich in den gebogenen Abschnitten 5 und 6. Die Klammerebene ist strichpunktiert eingezeichnet und mit E bezeichnet. Die Abwinklung um den Winkel β ist stark überzeichnet dargestellt, um die Erfindung zu veranschaulichen. Tatsächlich sollten die Abwinklungen erfindungsgemäß so gewählt werden, dass die Klammerenden senkrecht zur Klammerebene nicht mehr als 0,5 mm, vorzugsweise nicht mehr als 0,3 mm, weiter vorzugsweise nicht mehr als 0,1 mm auseinander stehen, während die Längen der Klammerbeine 1 cm oder mehr betragen können.

Solchermaßen ausgeführte Verschlussklammern lassen sich zwischen den Wänden 7 und 8 des Clipkanals einer im Übrigen nicht gezeigten, aber dem Fachmann geläufigen Verschließvorrichtung dergestalt führen, dass jeweils ein gebogener Abschnitt 5 und das Ende des gegenüberliegenden Klammerbeins 4 an der einen Wand 7 und der andere gebogene Abschnitt 6 und das Ende des anderen Klammerbeins 3 an der anderen Wand 8 anliegen. Die Verschlussklammer 1 liegt also nicht mehr vollflächig mit ihren Seiten, sondern mit vier Anlagepunkten an. Dasselbe gilt für eine zweite insgesamt mit 9 bezeichnete Verschlussklammer stärkeren Profils, die ebenso im Clipkanal geführt werden kann, ohne dass der Abstand der Wände 7, 8 geändert werden müsste. Die mit D bezeichnete effektive Klammerbreite ist für beide Klammern 1, 9 dieselbe. Vorzugsweise umfasst der Satz von Verschlussklammern von jeder der Verschlussklammern 1, 9 unterschiedlicher Profilstärke eine Vielzahl, die jeweils in einem Magazin, z.B. einer Spule oder einem Karton, zusammengefasst sind.

Verschlussklammern dieser Art können auf einfache Weise gefertigt werden, indem eine insgesamt mit 10 bezeichnete spiralförmige Wicklung aus einem Metalldraht 11, beispielsweise mit kreisrundem oder ovalem Profil, um ein Vierkantprofil 12 herum gebildet wird. Vorzugsweise weist das Vierkantprofil 12 eine zentrale Ausnehmung 13 auf, die als Sägelehre für eine Säge 14 oder ein anderweitiges Trennwerkzeug zur Vereinzelung der Verschlussklammern dienen kann. Die Säge 14 bzw. das Trennwerkzeug bewegt sich zum Trennen in Richtung des Pfeils A und oszilliert in Richtung des Doppelpfeils B. Beim Aufwickeln werden auf einfache Weise zugleich die Krümmung in der Klammerebene als auch im gleichen Schritt die erfindungsgemäße Abwicklung aus der Klammerebene heraus erzeugt.

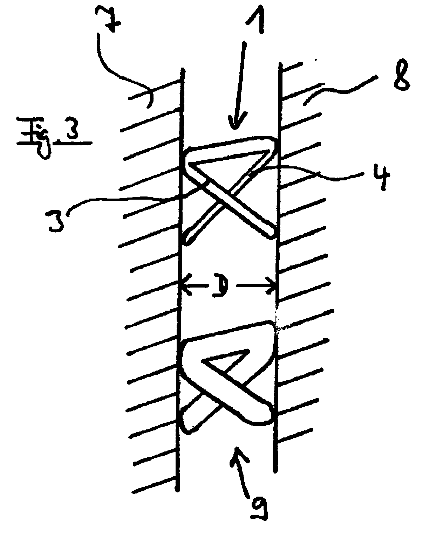

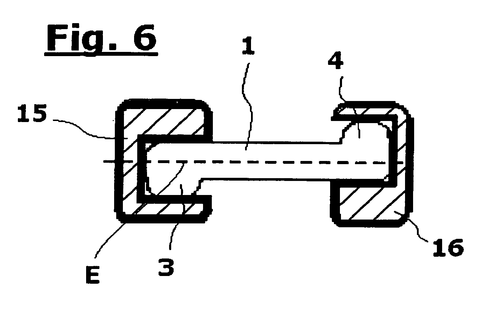

Fig. 6 zeigt einen erfindungsgemäßen Clipkanal mit zwei aus zwei Profilstäben 15 und 16 gebildeten Schienen, die in Bezug auf die Klammerebene E zueinander versetzt sind. Anders als in Fig. 3 ist der Klammerabschnitt zwischen den Klammerbeinen 3, 4 nicht mehr schräg im Clipkanal angeordnet. Ein parallel zur Klammerebene E verlaufendes Stirnprofil eines Stempels kann Klammerabschnitte verschiedener Verschlussklammern erfassen.

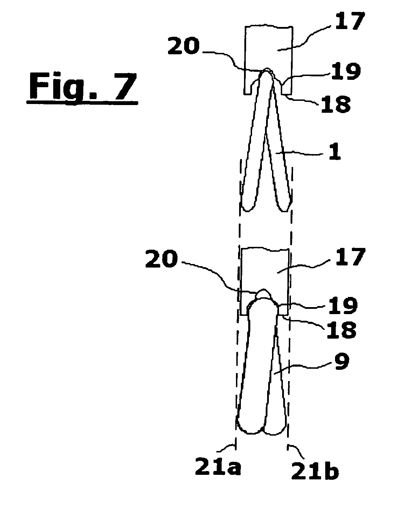

Dies ist für Verschlussklammern mit verschiedenen Materialstärken in Fig. 7 gezeigt. Das klammerseitige Ende des Stempels 17 ist zweifach dargestellt. Dessen Stirnfläche 18 weist eine erste, breitere Haltenut 19 auf, die eine Verschlussklammer 9 mit hoher Materialstärke formschlüssig aufnehmen kann. Innerhalb der breiten Haltenut 19 findet sich eine schmalere Haltenut 20 zur formschlüssigen Aufnahme einer schmaleren Verschlussklammer 1. Gestrichelte Hilfslinien 21a, 21b verdeutlichen, dass die Ausdehnung beider Verschlussklammern 1, 9 senkrecht zur Klammerebene identisch ist.

## Patentansprüche

1. Verschlussklammer (1, 9) zum Verschließen von schlauchförmigen Verpackungen durch Umschließen ihrer zusammengerafften Enden, mit einer im Wesentlichen U-förmigen Krümmung in der Klammerebene (E), **dadurch gekennzeichnet, dass** sie vor dem Verschließen zumindest eine Abwinklung aus der Klammerebene (E) heraus aufweist.

2. Verschlussklammer (1, 9) nach Patentanspruch 1, **dadurch gekennzeichnet, dass** die zumindest eine Abwinklung aus der Klammerebene (E) heraus sich in einem Klammerabschnitt (5, 6) befindet, in dem zumindest ein Teil der Krümmung in der Klammerebene liegt.

3. Verschlussklammer (1, 9) nach Patentanspruch 2, **dadurch gekennzeichnet, dass** sie aus einem Klammerrücken (2), zwei Klammerbeinen (3, 4) und dazwischen liegenden in der Klammerebene gekrümmten Übergangsabschnitten (5, 6) besteht und die Abwinklung aus der Klammerebene (E) heraus sich in einem oder beiden Übergangsabschnitten (5, 6) befindet.

4. Verschlussklammer (1, 9) nach Patentanspruch 3, **dadurch gekennzeichnet, dass** die Abwinklung sich in beiden Übergangsabschnitten (5, 6) befindet und so gewählt ist, dass die Klammerbeine (3, 4) gegensinnig und jeweils im gleichen Winkel aus der Klammerebene (E) heraus ausgelenkt sind.

5. Satz von Verschlussklammern (1, 9), von denen mindestens eine nach einem der vorstehenden Patentansprüche ausgebildet ist, von denen sich mindestens zwei Verschlussklammern (1, 9) durch ihre Profilstärke voneinander unterscheiden **dadurch gekennzeichnet, dass** die Abwinklungen aus der Klammerebene (E) heraus so gewählt sind, dass Verschlussklammern (1, 9) unterschiedlicher Profilstärke dieselbe effektive Klammerbreite haben.

6. Anordnung einer Verschließvorrichtung zum Verschließen von schlauchförmigen Verpackungen mit einem Clipkanal und einer Verschlussklammer (1, 9) nach einem der Ansprüche 1 bis 4 oder einem Satz von Verschlussklammern (1, 9) nach Anspruch 5, **dadurch gekennzeichnet, dass** die Breite des Clipkanals der effektiven Klammerbreite wenigstens einer der Verschlussklammern (1, 9) entspricht.

7. Clipkanal für Verschlussklammern (1, 9) zum Verschließen von schlauchförmigen Verpackungen mit einer im Wesentlichen U-förmigen Krümmung in der Klammerebene (E) mit zwei jeweils einem Klammerende zugeordneten Führungsschienen, **dadurch gekennzeichnet, dass** die Führungsschienen bezogen auf die Klammerebene (E) zueinander versetzt sind.

8. Stempel (17) zum Antreiben von Verschlussklammern (1, 9) für schlauchförmige Verpackungen mit einer im Wesentlichen U-förmigen Krümmung in der Klammerebene (E) in einem Clipkanal mit einem an seiner Stirnfläche (18) angeordneten Haltenut (19), **dadurch gekennzeichnet, dass** mindestens eine weitere, schmalere Haltenut (20) an der Stirnfläche (18) angeordnet ist.

9. Stempel (17) nach Patentanspruch 8, **dadurch gekennzeichnet, dass** die schmalere Haltenut (20) innerhalb der breiteren (19) angeordnet ist.

## Claims

1. Closing clip (1, 9) for closing tubular packs by enclosing their gathered-together ends, having a substantially U-shaped curvature in the clip plane (E), **characterized in that**, it has at least one portion angled out of the clip plane (E).

2. Closing clip (1, 9) according to Claim 1, **characterized in that** the at least one portion angled out of the clip plane (E) is located in a clip portion (5, 6) in which at least a part of the curvature lies in the clip plane.

3. Closing clip (1, 9) according to Claim 2, **characterized in that** it consists of a clip back (2), two clip legs (3, 4) and transition portions (5, 6) that lie in between and are curved in the clip plane, and the portion angled out of the clip plane (E) is located in one or both transition portions (5, 6).

4. Closing clip (1, 9) according to Claim 3, **characterized in that** the angled portion is located in both transition portions (5, 6) and is selected such that the clip legs (3, 4) are deflected in opposite directions and in each case at the same angle out of the clip plane (E).

5. Set of closing clips (1, 9) of which at least one is formed according to one of the preceding claims, of which at least two closing clips (1, 9) differ from one another by their profile thickness, **characterized in that** the portions angled out of the clip plane (E) are selected such that closing clips (1, 9) with different profile thicknesses have the same effective clip width.

6. Arrangement of a closing apparatus for closing tubular packs which has a clip channel and a closing clip (1, 9) according to one of Claims 1 to 4 or a set of closing clips (1, 9) according to Claim 5, **characterized in that** the width of the clip channel corresponds to the effective clip width of at least one of the closing clips (1, 9).

7. Clip channel for closing clips (1, 9) for closing tubular packs, said closing clips (1, 9) having a substantially U-shaped curvature in the clip plane (E), said clip channel having two guide rails assigned to in each case one clip end, **characterized in that** the guide rails are offset with respect to one another with regard to the clip plane (E).

8. Punch (17) for driving closing clips (1, 9) for tubular packs, said closing clips (1, 9) having a substantially U-shaped curvature in the clip plane (E), in a clip channel having a retaining groove (19) arranged on its end face (18), **characterized in that** at least one further, narrower retaining groove (20) is arranged on the end face (18).

9. Punch (17) according to Claim 8, **characterized in that** the narrower retaining groove (20) is arranged within the wider retaining groove (19).

## Revendications

1. Agrafe de fermeture (1, 9) destinée à fermer des emballages tubulaires en entourant leurs extrémités ramassées, avec une courbure sensiblement en U dans le plan de l'agrafe (E), **caractérisée en ce qu'**elle présente au moins un coude sortant du plan de l'agrafe (E).

2. Agrafe de fermeture (1, 9) selon la revendication 1, **caractérisée en ce qu'**au moins un coude sortant du plan de l'agrafe (E) se situe dans une section de l'agrafe (5, 6) qui contient au moins une partie de la courbure dans le plan de l'agrafe.

3. Agrafe de fermeture (1, 9) selon la revendication 2, **caractérisée en ce qu'**elle se compose d'un dos d'agrafe (2), de deux jambes d'agrafe (3, 4) et au milieu de sections transitoires (5, 6) courbées dans le plan de l'agrafe et **en ce que** le coude sortant du plan de l'agrafe (E) se situe dans une ou les deux sections transitoires (5, 6).

4. Agrafe de fermeture (1, 9) selon la revendication 3, **caractérisée en ce que** le coude se situe dans les deux sections transitoires (5, 6) et est choisi de sorte que les jambes d'agrafe (3, 4) soient déviées en sens inverse et respectivement dans le même angle hors du plan de l'agrafe (E).

5. Jeu d'agrafes de fermeture (1, 9), dont au moins l'une est réalisée selon l'une quelconque des revendications précédentes, dont au moins deux agrafes de fermeture (1, 9) se distinguent de par leur épaisseur de profilé, **caractérisé en ce que** les coudes sortant du plan de l'agrafe (E) sont choisis de sorte que des agrafes de fermeture (1, 9) d'épaisseurs de profilé différentes présentent la même largeur effective d'agrafe.

6. Ensemble d'un dispositif de fermeture destiné à fermer des emballages tubulaires avec un canal de clip et une agrafe de fermeture (1, 9) selon l'une quelconque des revendications 1 à 4 ou un jeu d'agrafes de fermeture (1, 9) selon la revendication 5, **caractérisé en ce que** la largeur du canal de clip correspond à la largeur effective d'agrafe d'au moins l'une des agrafes de fermeture (1, 9).

7. Canal de clip pour agrafes de fermeture, (1, 9) destinées à fermer des emballages tubulaires, avec une courbure sensiblement en U dans le plan de l'agrafe (E), présentant deux rails de guidage associés respectivement à une extrémité d'agrafe, **caractérisé en ce que** les rails de guidage sont décalés l'un par rapport à l'autre relativement au plan de l'agrafe (E).

8. Piston (17) destiné à entraîner, dans un canal de clip, des agrafes de fermeture (1, 9) pour des emballages tubulaires, avec une courbure sensiblement en U dans le plan de l'agrafe (E), avec une rainure de retenue (19) disposée sur sa surface frontale (18), **caractérisé en ce qu'**au moins une autre rainure de retenue (20) plus étroite est disposée sur la surface frontale (18).

9. Piston (17) selon la revendication 8, **caractérisé en ce que** la rainure de retenue (20) plus étroite est disposée dans la plus large (19).
